# EUROPEAN PATENT SPECIFICATION

(11) **EP 0 426 645 B1**
(45) Date of publication and mention of the grant of the patent: **03.07.1996**
(21) Application number: 90870207.9
(22) Date of filing: 30.10.1990
(51) Int. Cl.: C08F 210/16, C08F 4/602

(54) **Process for producing syndiotactic copolymers of propylene and olefins**
Verfahren zur Herstellung von syndiotaktischen Copolymeren aus Propylen und Olefinen
Procédé de fabrication de copolymères syndiotactiques de propylène et d'oléfines

(30) Priority: 30.10.1989 EP 89870166
(43) Date of publication of application: 08.05.1991
(73) Proprietor: FINA RESEARCH S.A., B-7181 Feluy (BE)
(72) Inventor: Haspeslagh, Luc, B-1710 Dilbeek (BE); Folie, Pascal, B-6180 Courcelles (BE)

(56) References cited:
- EP-A- 0 351 392
- EP-A- 0 387 691
- EP-A- 0 395 055
- JOURNAL OF THE AMERICAN CHEMICAL SOCIETY, vol. 110, 1988, pages 6255-6256, American Chemical Society; J.A. EWEN et al.: "Syndiospecific propylene polymerizations with group 4 metallocenes"

## Description

The present invention relates to a process for producing copolymers of propylene and olefins having from 2 to 10 carbon atoms having a stereoregular microstructure and more particularly random copolymers of propylene and olefins having from 2 to 10 carbon atoms in which the microstructure of the side chains is highly syndiotactic. More particularly the present invention relates to the production of syndiotactic random copolymers of propylene and olefins having from 4 to 8 carbon atoms, wherein the polypropylene units and the polyolefin units, except polyethylene units, have each syndiotactic microstructure in the random copolymer.

As is well known, olefins polymers or copolymers such as polypropylene, polybutene, polypentene ... etc, are generally produced by techniques such as radical polymerization, anionic polymerization, cationic polymerization and polymerization using a Zieglertype catalyst, as well as copolymers of propylene with other olefins. These polymers are divided into three groups, isotactic, syndiotactic and atactic polymers, depending on the steric configuration of side chains thereof. It has heretofore been known that usual radical, anionic and cationic polymerization methods provide olefin polymers having mainly an atactic structure, and that the polymerization methods using a Ziegler-type catalyst provide olefin polymers having mainly an isotactic or atactic structure.

The isotactic structure is typically described as having the methyl groups attached to the tertiary carbon atoms of successive monomeric units on the same side of a hypothetical plane through the main chain of the polymer, e.g., the methyl groups are all above or below the plane. Another way of describing the structure is through the use of NMR. Bovey's NMR nomenclature for an isotactic pentad is ...mmmm... with each "m" representing a "meso" dyad or successive methyl groups on the same side in the plane. As known in the art, any deviation or inversion in the structure of the chain lowers the degree of isotacticity of the polymer.

In contrast to the isotactic structure, syndiotactic polymers are those in which the methyl groups attached to the tertiary carbon atoms of successive monomeric units in the chain lie on alternate sides of the plane of the polymer.
In NMR nomenclature, this pentad is described as ...rrrr... in which each "r" represents a "racemic" dyad, i.e. methyl groups on alternate sides of the plane. The percentage of r dyads in the chain determines the degree of syndiotacticity of the polymer. A number of methods of preparing olefin homopolymers or copolymers and their structures have been reported. However, preparation of random copolymers of propylene and olefins having from 2 to 10 carbon atoms of very high syndiotactic structure has not yet been disclosed.

European patent 0412416 discloses a copolymer of propylene and butene-1, the constituent monomer units of which comprise 20-63 wt% of propylene and 37-80 wt% of butene - 1. The metallocene catalyst used in the examples is an isopropyl (cyclopentadienyl - 1 - fluorenyl) zirconium dichloride.

European patent 0395055 discloses a syndiotactic polypropylene copolymer comprising 70 to 99.9 mole % of propylene and 0.1 to 30 mole % of olefin other than propylene. The catalysts which can be used to manufacture the copolymer include isopropyl (cyclopentadienyl - 1 - fluorenyl) Me dihalogenides wherein Me can be zirconium or hafnium.

European patent 0387691 claims a process for the preparation of syndiotactic (co)polymers in the presence of a hafnium metallocene catalyst.

The article from J. Am. Chem. Soc. 1988, 110, pages 6255-56 discloses the preparation of syndiospecific propylene homopolymers in the presence of an isopropyl (cyclopentadienyl - 1 - fluorenyl) hafnium dichloride.

The present invention provides a process for producing random copolymers of propylene and olefins having from 2 to 10 carbon atom having a very high syndiotactic index and with a novel syndiotactic microstructure. The novel microstructure for the syndiotactic copolymers included within the present invention has blocks of repeating racemic (r) dyads connected by units predominantly consisting of a pair of meso (m) dyads, i.e., a meso triad "mm." The predominant structure of each polymer in the copolymer chain is described in NMR nomenclature as ... rrrmmrrr ...
Preferably, the degree of syndiotacticity in the polypropylene units in the copolymer chain consists of greater than 80% racemic dyads, most preferably, greater than 90% racemic dyads, and the deviations from the repeating racemic pattern are predominantly meso triads, while the degree of syndiotacticity for the polyolefins units, except polyethylene units, in the copolymer consists of greater than 70% racemic dyads.

The present invention relates to a process for producing random copolymers of propylene and olefins having from 2 to 10carbon atoms having a degree of polymerization of not less than 5, and having a stereoregular structure which is mainly syndiotactic.

The microstructure is obtained through use of a stereorigid metallocene catalyst described by the formula :

R"(CpRₙ)(CpR'ₘ)MeQₖ

wherein each Cp is a cyclopentadienyl or substituted cyclopentadienyl ring; each Rₙ and R'ₘ is the same or different and is a hydrocarbyl radical having 1-20 carbon atoms; R" is a structural bridge between the two Cp rings imparting stereorigidity to the catalyst; Me is titanium ; and each Q is a hydrocarbyl radical or is a halogen.

Further, R'ₘ may be selected so that (CpR'ₘ) is a substantially different substituted cyclopentadienyl ring than (CpRₙ). It was discovered that the use of a metallocene catalyst as described above with cyclopentadienyl ligands that are substantially different in terms of their substituents, and thus their electrical and steric effects, produces not only a predominantly syndiotactic polymer rather than an isotactic polymer but also syndiotactic copolymers having the novel microstructure described above.

The microstructure of syndiotactic copolymers is obtained by utilizing at least one of the catalysts described by the above formula and introducing the catalyst into a polymerization reaction zone containing both olefin monomers. In addition, an electron donor compound and/or a cocatalyst such as alumoxane may be introduced into the reaction zone. Further, the catalyst may also be pre-polymerized prior to introducing it into the reaction zone and/or prior to the stabilization of reaction conditions in the reactor.

### DETAILED DESCRIPTION

The copolymers of propylene and olefins made according to the present invention have a syndiotactic structure and include, syndiotactic propylene-ethylene, propylene-butene, propylene-pentene, propylene-4-methylpentene, propylene-hexene, propylene-octene and analogs. The olefin is preferably selected from the group comprising ethylene, 1-butene, 1-pentene, 4-methylpentene, 1-hexene, 1-heptene, 1-octene, 1-nonene and 1-decene. This syndiotactic structure of the copolymers of the invention consists predominantly of the structure described in NMR nomenclature as ... rrrmmrrrr... and consists of a very high percentage of racemic dyads. The copolymers can be produced to varying specifications for melting points, molecular weights, and molecular weight distributions. The tacticity of the copolymers of the invention is determined by the nuclear magnetic resonance (NMR) method. In more detail, the tacticity of the homopolymers of olefins is determined by analyzing the signal of C, carbon of an aromatic ring and the signal of methine-methylene carbon in NMR (nuclear magnetic resonance spectrum as measured using an isometric carbon), or the proton signal o H-NMR. The tacticity can be determined by NMR for each given number of constituting units connected continuously, such as a diad in which the number of constituting units is two, a triad in which the number of constituting units is three, and a pentad in which the number of constituting units is five. The term "copolymer having mainly a syndiotactic structure" as used herein means that each polymer units present in the random copolymer has such a syndiotactic structure that the syndiotacticity expressed in terms of the diad is not less than 80% for the propylene units and 70% for the olefins units, except those formed from ethylene, and more particularly not less than 80% with the same restriction for ethylene. The metallocene catalysts of the present invention may be described by the formula R"(CpRₙ)(CpR'ₘ) MeQₖ wherein each Cp is a cyclopentadienyl or substituted cyclopentadienyl ring; Rₙ and R'ₘ are hydrocarbyl radicals having 1-20 carbon atoms, each Rₙ may be the same or different; R" is a structural bridge between the two Cp rings imparting stereorigidity to the catalyst, and R" is preferably selected from the group consisting of an alkyl radical having 1-4 carbon atoms or a hydrocarbyl radical containing silicon, germanium, phosphorus, nitrogen, boron, or aluminum; Me is titanium ; each Q is a hydrocarbyl radical having 1-20 carbon atoms or is a halogen; 0 ≤ k ≤ 3; 0 ≤ n ≤ 4; and 1 ≤ m ≤ 4. In order to be syndio-specific, it was discovered that the catalysts must have substantially different Cp ring substituents. Therefore, R'ₘ is selected such that (CpR'ₘ) is a substantially different substituted ring than (CpRₙ). In order to produce a syndiotactic polymer, the characteristics of the groups substituted directly on the cyclopentadienyl rings seem to be important. Where there is a substantial difference in the characteristics of the ring substituants, either electrical. steric or other difference resulting In a substantially different effect on the metal complex as compared with symmetrical rings, then the catalyst can be expected to produced predominantly syndiotactic polymers.

In a preferred catalyst useful in producing polymers of the present invention, Me is titanium; Q is preferably a halogen, and it is most preferably chlorine; and k is preferably 2, but it may vary with the valence of the metal atom. Exemplary hydrocarbyl radicals include methyl, ethyl, propyl, isopropyl, butyl, isobutyl, amyl, isoamyl, hexyl, heptyl, octyl, nonyl, decyl, cetyl, and phenyl. Other hydrocarbyl radicals include other alkyl, aryl, alkenyl, alkylaryl or arylalkyl radicals. Further, Rₙ and R'ₘ may include hydrocarbyl radicals attached to a single carbon atom in the Cp ring as well as radicals that are bonded to two carbon atoms in the ring.

The catalyst may be prepared by any method known in the art. The Examples below disclose two methods of preparing the catalysts with the second method being preferred as it produces a more stable and active catalyst. It is important that the catalyst complex be "clean" as usually low molecular weight, amorphous polymer is produced by impure catalysts. Generally, the preparation of the catalyst complex consists of forming and isolating the Cp or substituted Cp ligands which are then reacted with a halogenated metal to form the complex.

The metallocene catalysts of the present invention are useful in many of the polymerization processes known in the art including many of those disclosed especially for the use of isotactic copolymers of propylene and other olefins. When the catalysts of the present invention are used in these types of processes, syndiotactic copolymers are produced rather than isotactic copolymers. A preferred polymerization procedure includes the step of prepolymerizing the catalyst and/or precontacting the catalyst with a cocatalyst and the olefin monomers prior to introducing the catalyst into a reaction zone.

Consistent with the prior disclosures of metallocene catalysts for the production of isotactic polymers, the catalysts of the present invention are particularly useful in combination with an aluminum cocatalyst, preferably an alumoxane, an alkyl aluminum, or a mixture thereof. In addition, a complex may be isolated between a metallocene catalyst as described herein and an aluminum cocatalyst in accordance with the teachings of European Patent Publication no. 226,463. The alumoxanes useful in combination with the catalysts of the present invention may be represented by the general formula (R-A1-O-) in the cyclic form and R(R-A1-O)ₙ-ALR2 in the linear form wherein R is an alkyl group with one to five carbon atoms and n is an integer from 1 to about 20. Most preferably, R is a methyl group. The alumoxanes can be prepared by various methods known in the art. Preferably, they are prepared by contacting water with a solution of trialkyl aluminum, such as, trimethyl aluminum, in a suitable solvent such as benzene. Another preferred method includes the preparation of alumoxane in the presence of a hydrated copper sulfate as described in U.S. Patent No. 4,404,344. This method comprises treating a dilute solution of trimethyl aluminum in toluene with copper sulfate. The preparation of other aluminum cocatalysts useful in the present invention may be prepared by methods known to those skilled in the art.

The Examples given below illustrate the present invention and its various advantages and benefits in more detail. Synthesis procedures are described for zirconium metallocene catalysts. The general catalyst formula for the catalyst produced by these methods is isopropyl(fluorenyl)(cyclopentadienyl) ZrCl₂.

### PREPARATION OF THE CATALYST - METHOD A

The synthesis procedures for the catalyst were performed under an inert gas atmosphere using a Vacuum Atmospheres glovebox or Schlenk techniques. The synthesis process generally comprises the steps of 1) preparing the halogenated or alkylated metal compound, 2) preparing the ligand, 3) synthesizing the complex, and 4) purifying the complex.

In Method A, the halogenated metal compound was prepared using tetrahydrofuran ("THF") as a solvent resulting in THF bound in with the final catalyst complex. Specifically, MeCl₄THF was prepared as described in Manzer, L., Inorg. Synth., 21, 135-36 (1982). In the Examples below, Me is titanium.

The substituted dicyclopentadienyl ligand may be prepared using various processes known in the art depending upon the selection of the specific bridge or ring substituents. In the preferred embodiments shown in the Examples below, the ligand is 2,2-isopropyl-(fluorene)cyclopentadiene. To prepare this ligand, 44 gms (0.25 mol) of fluorene were dissolved in 350 ml THF in a round bottom flask equipped with a side arm and dropping funnel. Contained within the funnel were 0.25 mol of tri-methyl lithium (CH₃Li) in ether (1.4 M). The CH₃Li was added dropwise to the fluorene solution and the deep orange-red solution was stirred for several hours. After gas evolution had ceased, the solution was cooled to -78°C and 100 ml of THF containing 26.5 gms (0.25 mol) of 6,6-dimethylfulvene was added dropwise to the solution. The red solution was gradually warmed to room temperature and stirred overnight. The solution was treated with 200 ml of water and stirred for ten minutes. The organic fraction of the solution was extracted several times with 100 ml portions of diethylether, and the combined organic phases were dried over magnesium sulfate. Removal of the ether from the organic phases left a yellow solid which was dissolved in 500 ml of chloroform and recrystallized by addition of excess methanol at 2°C to yield a white powder.

The elemental analysis of the ligand showed carbon to be 91.8% by weight of the compound and hydrogen to be 7.4% by weight. This corresponds to the weight percentages for C₂₁H₂₀, of 92.6% for carbon and 7.4% for hydrogen. The NMR spectrum for the ligand establishes the structure to include one cyclopentadienyl ring attached by an isopropyl bridge to a second cyclopentadienyl ring that is substituted to form a fluorenyl radical.

A syndiospecific catalyst complex was synthesized using the ligand and the metal tetrachloride-THF complex. The catalyst was formed by adding 0.05 mol of N-butyl lithium and hexane (1.6M) was added dropwise to a 100 ml THF solution containing 6.8 gms (0.025 mol) of the Cp ligand described above. The solution was stirred at 35°C for twelve hours after which 9.4 gms (0.025 mol) of ZrCl₄-2THF contained in 200 ml of THF were rapidly cannulated together with the ligand solution into a 500 ml round bottom flask with vigorous stirring. The deep orange-red solution was stirred for twelve hours under reflux. A mixture of LiCl and a red solid were isolated by removing the solvents under vacuum.

Catalyst complexes produced in accordance with Method A are noted to be somewhat impure and extremely air and moisture sensitive. In the Examples below, Method A catalysts were purified using one or more of the following purification procedures :
1. Extraction with pentane. Trace quantities of a yellow impurity contained in the solid red catalyst complex were repeatedly extracted with pentane until the pentane became colorless.
2. Fractional recrystallization. The red complex was separated from the white LiCl by dissolving it in 100 ml of toluene, filtering it through a fine porosity sintered glass frit, and forming a saturated solution by adding pentane. The red zirconium complex was isolated using crystallization at - 20°C.
3. Chromotography on bio-beads. 50 gms of bio-beads SM-2 (20-50 mesh spherical, macroreticular styrene-divinylbenzene copolymer from Bio-Rad laboratories) were dried under vacuum at 70°C for 48 hours in a 30 x 1.5 centimeter column. The beads were then equilibriated with toluene for several hours. A concentrated solution of the red catalyst complex in toluene was eluded down the column with 150-200 ml of toluene. The complex was recovered by evaporating the toluene under vacuum.

The examples below illustrate the present invention in more details.

### EXAMPLE 1

1 l of liquid propylene was added into a dried 1,5 l glass reactor equipped with inclined stirrer.

To this, were injected a solution of 3 mg isopropylene fluorenyl cyclopentadienyl titanium dichloride in 5 ml of a 10wt% solutions of MAO in toluene previously precontacted in a glove box under nitrogen. The reactor was thermostated at 60°C (and was left polymerising for 1 hour under four different ethylene pressures).

The polymers were recovered by venting off the monomer gas.

Approximatively 120 g of polymeric material were respectively collected. Their characteristics are shown on table 1.

¹³C NMR analysis of the different propylene-ethylene sequences indicate that the ethylene incorporation is predominantly random and that even for the copolymer with the highest ethylene content the number of sequences having a length longer than 2 monomer units is only 20% of the total amount of sequences (see SDE 2).

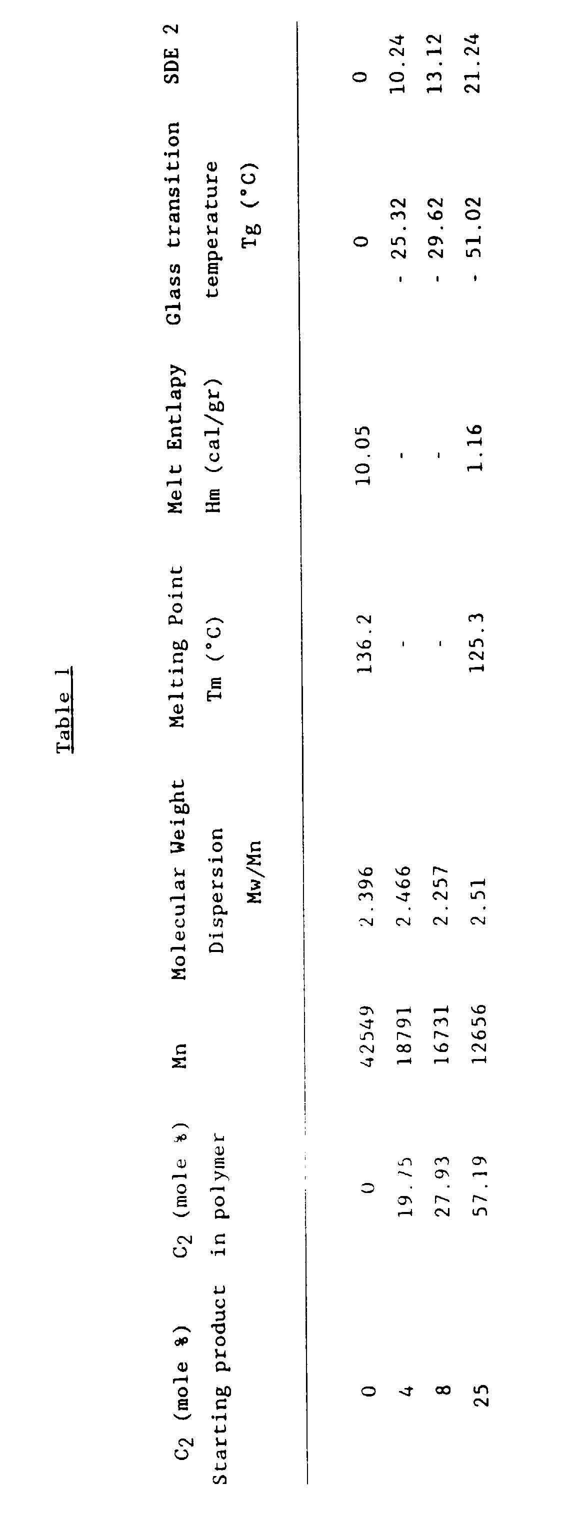

### EXAMPLE 2 (200-031)

A dried 1.5 l glass reactor equipped with inclined stirrer was filled under nitrogen flow with 1 l of five different liquid monomer mixtures of propylene and hexene. To this, were injected a solution of 8 mg isopropylene fluorenyl cyclopentadienyl titanium dichloride in 40 ml of a 10wt % solutions of MAO in toluene previously precontacted in a glove box under nitrogen. The reactor was thermostated at 60°C and was left polymerising for 1 hour. All copolymers proved to be soluble in the monomer mixture and were recovered by distilling of the monomer under reduced pressure. Approximatively 200 g of polymeric material were respectively collected. Their characteristics are shown on Table 2.

The ratio of the ¹³C NMR peak at 41.0 to 41.9 ppm (CH₂ for hexene - hexene blocks) with the peak at 23.5 ppm (CH₂(2) in the hexene branch) is an indication for the randomness or block type incorporation of the 1-hexene. For example 2 this ratio is only 13.7 % indicating that the majority of the 1-hexene is incorporated as isolated comonomer between two propylene monomers. This ratio increases to 71.8 % for example 3 and to 81.1 % for example 4 indicating the block formation of polyhexene at increased hexene concentration.

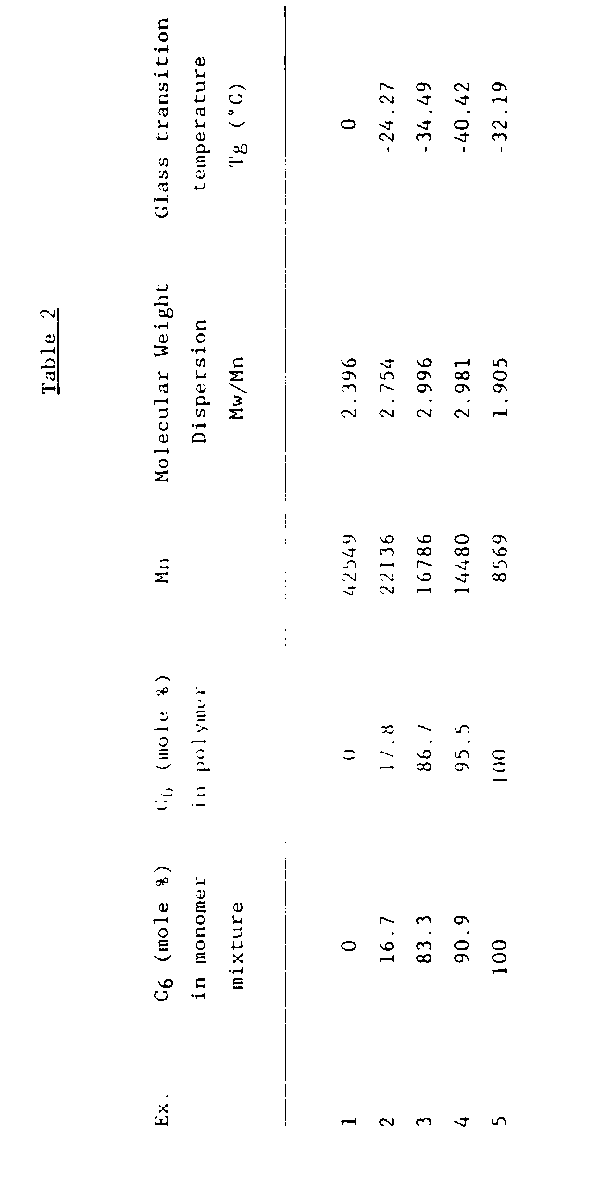

## Claims

1. A process for copolymerizing propylene and an olefin monomer having from 2 to 10 carbon atoms to form a syndiotactic random copolymer in which the microstructure of the polypropylene units and the polyolefin units, except the polyethylene units, of the polymer chain are each consisting of blocks of repeating racemic (r) dyads being predominantly connected by units consisting of a meso triad (mm), said process comprising :
a) selecting a metallocene catalyst described by the formula R"(CpRₙ)(CpR'ₘ)MeQₖ wherein each Cp is a cyclopentadienyl or substituted cyclopentadienyl ring, each Rn is the same or different and is a hydrocarbyl radical having 1-20 carbon atoms; each R'ₘ is the same or different and is a hydrocarbyl radical having 1-20 carbon atoms; R" is a structural bridge between the Cp rings imparting stereorigidity to the catalyst; Me is titanium ; each Q is a hydrocarbyl radical having 1-20 carbon atoms or is a halogen; 0≤k≤3; 0≤n≤4; 1≤m≤4; and wherein R'ₘ is selected such that (CpR'ₘ) is a sterically different ring than (CpRₙ); and
b) introducing the metallocene catalyst into a polymerization reaction zone containing propylene and an olefin monomer having from 2 to 10 carbon atoms, and an aluminium compound as co-catalyst.
c) maintaining the reaction zone under polymerization reaction conditions.

2. The process of claim 1 wherein the structure of the polypropylene units of the polymer chain consists of greater than 80% racemic (r) dyads.

3. The process of claim 1 wherein the structure of the polyolefin units, except the polyethylene units, of the polymer chain consists of greater than 70% racemic (r) dyad.

4. The process of claim 1 wherein the olefin is selected from the group comprising ethylene, 1-butene, 1-pentene, 4-methylpentene, 1-hexene, 1-heptene, 1-octene, 1-nonene and 1-decene.

## Patentansprüche

1. Verfahren zur Copolymerisierung von Propylen und einem Olefinmonomer mit von 2 bis 10 Kohlenstoffatomen zur Bildung eines syndiotaktischen statistischen Copolymers, in dem die Mikrostrukturen von den Polypropyleneinheiten und den Polyolefineinheiten, außer den Polyethyleneinheiten, der Polymerkette jeweils aus Blöcken von sich wiederholenden racemischen (r) Dyaden bestehen, die überwiegend durch aus einer meso-Triade (mm) bestehenden Einheiten verbunden sind, wobei dieses Verfahren umfaßt:
a) Auswählen eines Metallocenkatalysators, dargestellt durch die Formel R"(CpRₙ)(CpR'ₘ)MeQₖ, wobei jedes Cp ein Cyclopentadienyl- oder substituierter Cyclopentadienylring ist, jedes Rn gleich oder verschieden ist und ein Kohlenwasserstoffrest mit 1-20 Kohlenstoffatomen ist; jedes R'ₘ gleich oder verschieden ist und ein Kohlenwasserstoffrest mit 1-20 Kohlenstoffatomen ist; R" eine strukturelle Brücke zwischen den Cp Ringen ist, die dem Katalysator sterische Starrheit verleiht; Me Titan ist; jedes Q ein Kohlenwasserstoffrest mit 1-20 Kohlenstoffatomen oder ein Halogen ist; O≤k≤3; 0≤n≤4; 1≤m≤4; und wobei R'ₘ so ausgewählt wird, daß (CpR'ₘ) ein sterisch anderer Ring als (CpRₙ) ist; und
b) Einführen des Metallocenkatalysators in eine Polymerisations-Reaktionszone, die Propylen und ein Olefinmonomer mit von 2 bis 10 Kohlenstoffatomen umfaßt, und einer Aluminiumverbindung als Co-Katalysator,
c) Halten der Reaktionszone unter Polymerisationreaktionsbedingungen.

2. Verfahren nach Anspruch 1, wobei die Struktur von den Polypropyleneinheiten der Polymerkette zu mehr als 80% aus racemischen (r) Dyaden besteht.

3. Verfahren nach Anspruch 1, wobei die Struktur von den Polyolefineinheiten, außer den Polyethyleneinheiten, der Polymerkette zu mehr als 70% aus racemischen (r) Dyaden besteht.

4. Verfahren nach Anspruch 1, wobei das Olefin aus der Gruppe ausgewählt wird, die Ethylen, 1-Buten, 1-Penten, 4-Methylpenten, 1-Hexen, 1-Hepten, 1-Okten, 1-Nonen und 1-Decen umfaßt.

## Revendications

1. Procédé de copolymérisation de propylène et d'un monomère oléfine ayant de 2 à 10 atomes de carbone pour former un copolymère syndiotactique statistique dont les microstructures des unités polypropylène et des unités polyoléfine, à l'exception des unités polyéthylène, de la chaîne polymérique sont chacune constituées de blocs de dyads racémiques (r) répétitifs connectés de manière prédominante par des unités constituées d'un triad méso (mm), le dit procédé comprenant :
a) choisir un catalyseur métallocène décrit par la formule R"(CpRₙ)(CpR'ₘ)MeQₖ dans laquelle chaque Cp est un anneau cyclopentadiényl ou cyclopentadiényl substitué, chaque Rₙ est identique ou différent et est un radical hydrocarbure ayant de 1 à 20 atomes de carbone; chaque R'ₘ est identique ou différent et est un radical hydrocarbure ayant de 1 à 20 atomes de carbone; R" est un pont structurel entre les anneaux Cp qui apporte la stéréorigidité au catalyseur; Me est le titane; chaque Q est un radical hydrocarbure ayant de 1 à 20 atomes de carbone ou est un halogène; 0 ≤ k ≤ 3; 0 ≤ n ≤ 4; et 1 ≤ m ≤ 4; et dans laquelle est choisi pour que (CpR'ₘ) soit un anneau stériquement différent de (CpRₙ); et
b) introduuire le catalyseur métallocène dans une zone de réaction de polymérisation contenant du propylène et un monomère oléfine ayant de 2 à 10 atomes de carbone, et un composé aluminium comme co-catalyseur.
c) maintenir la zone de réaction dans des conditions de réaction de polymérisation.

2. Procédé selon la revendication 1 dans lequel la structure des unités polypropylène de la chaîne polymérique est constituée de plus de 80% de dyads racémiques (r).

3. Procédé selon la revendication 1 dans lequel la structure des unités polyoléfine, à l'exception des unités polyéthylène, de la chaîne polymérique est constituée de plus de 70% de dyads racémiques (r).

4. Procédé selon la revendication 1 dans lequel l'oléfine est choisie parmi le groupe comprenant l'éthylène, le 1-butène, le 1-pentène, le 4-méthylpenténe le 1-hexéne, le 1-hepténe, le 1-octéne, le 1-nonène et le 1-décène.
